# FASCICULE DE BREVET EUROPEEN

(11) **EP 2 340 727 B1**
(45) Date de publication et mention de la délivrance du brevet: **01.08.2012**
(21) Numéro de dépôt: 09306352.7
(22) Date de dépôt: 30.12.2009
(51) Int. Cl.: A23P 1/08, A23L 1/212, B26D 3/26

(54) **Procédé et dispositif de fabrication de garniture de tartes à base de pulpe de pommes**
Verfahren und Vorrichtung zum Herstellen von Kuchengarnierungen auf der Basis von Apfelfruchtfleisch
Method and device for manufacturing pie toppings using apple pulp

(43) Date de publication de la demande: 06.07.2011
(73) Titulaire: Création Bois Giroult (Sarl), 75007 Paris (FR)
(72) Inventeur: Passard, Alain, 75016 Paris (FR)
(74) Mandataire: de Mareüil-Villette, Caroline

(56) Documents cités:
- US-A- 3 532 510
- US-A- 4 879 122
- US-A- 6 082 253
- US-A1- 2003 072 853
- US-B1- 6 200 617

## Description

L'invention concerne un procédé et un dispositif de fabrication mécanique d'éléments de garniture de tartes à partir de pulpe de pommes découpée en rubans, enroulés ensuite sur eux-mêmes en forme de « bouton de rose ».

On connaît déjà, par la demande de brevet français n° 2 897 240, un procédé et une installation de garnissage d'un produit pâtissier avec des lamelles de pommes consistant à disposer lesdites lamelles sur un support plan, de manière à les individualiser, sans contact les uns avec les autres, à effectuer une reconnaissance vidéo du positionnement de chaque lamelle sur ledit support, à prélever celles-ci individuellement au moyen d'un robot, puis à assurer la dépose automatique desdites lamelles sur un fond de tarte, selon un arrangement particulier prédéterminé.

Ce procédé et ce dispositif ne s'appliquent qu'à des lamelles de fruits, en particulier de pommes, préalablement découpées en utilisant des moyens traditionnels, puis disposées sur une bande transporteuse, sans que les moyens utilisés pour cela aient été précisés : ce qui limite l'objet de l'invention à la mise en place automatique sur des fonds de tartes d'éléments de garniture de géométrie assez simple.

On connaît aussi, par la demande de brevet français n° 2.912.287, un procédé et un dispositif permettant l'industrialisation de la fabrication et, par conséquent, la commercialisation de tartes TATIN par la grande distribution, en utilisant la chaîne du froid, tout en assurant, en amont, un contrôle sérieux de la fabrication lors des différentes étapes du procédé d'automatisation de celle-ci.

Tous les procédés et dispositifs utilisés actuellement pour automatiser la fabrication de pâtisseries traditionnelles sont spécifiques du produit dont il s'agit et n'ont guère en commun que l'utilisation de la chaîne du froid pour leur conservation en nombre et leur distribution.

Par conséquent, aucun de ceux-ci n'était donc susceptible d'être utilisé, même après adaptation, pour réaliser mécaniquement des garnitures en forme de « bouton de rose ».

La présente invention a pour but de remédier à ces inconvénients. Cette invention telle qu'elle est caractérisée dans les revendications résout le problème consistant à définir un procédé et à créer un dispositif permettant de réaliser mécaniquement des éléments de garniture de pâtisserie à partir de pommes découpées en rubans, enroulés ensuite sur eux-mêmes puis conformés de façon à obtenir, après cuisson, une forme de bouton de rose, d'un bel effet esthétique.

Les avantages obtenus, grâce à cette invention, consistent pour l'essentiel, en ce que des tartes en forme de bouquet de roses prêtes pour la cuisson, peuvent être ainsi fabriquées quasi-automatiquement en grand nombre en vue de leur commercialisation par l'intermédiaire de la grande distribution ou par vente directe aux professionnels de la restauration, en recourant à la chaîne du froid, comme c'est déjà le cas avec certains produits. Des « boutons » seuls, préalablement surgelés, pouvant d'ailleurs être vendus directement à des pâtissiers pour le garnissage de leurs tartes et d'autres pâtisseries.

D'autres caractéristiques et avantages apparaîtront dans la description qui va suivre d'une machine de production industrielle de « boutons de roses » réalisés à partir de pommes en utilisant le procédé selon l'invention, donné à titre d'exemple non limitatif au regard des dessins annexés sur lesquels :
- la figure 1 représente une vue de côté schématique de la machine,
- la figure 2 représente une vue de dessus schématique de la machine,
- la figure 3 représente une vue de côté, en perspective, du dispositif de base de découpe et de déroulage de rubans de pommes,
- la figure 4 représente une vue de derrière, en perspective, du dispositif automatique de découpe et de déroulage de rubans de pommes obtenus à partir du dispositif de base de la figure 3.
- la figure 5 représente une vue de côté, en perspective, du dispositif d'enroulage du ruban,
- la figure 6 représente une vue de côté, en perspective, du dispositif de tranchage des rouleaux,
- la figure 7 représente une vue de face, en perspective, du peigne fixe de décollage des rubans de la bande transporteuse,
- la figure 8 représente le dispositif de repoussage, vers l'une des extrémités de la partie centrale des rouleaux,
- la figure 9 représente une vue de côté, en perspective, d'un groupement de « boutons de roses » dans un préhenseur en vue de leur dépose sur un fond de tarte,

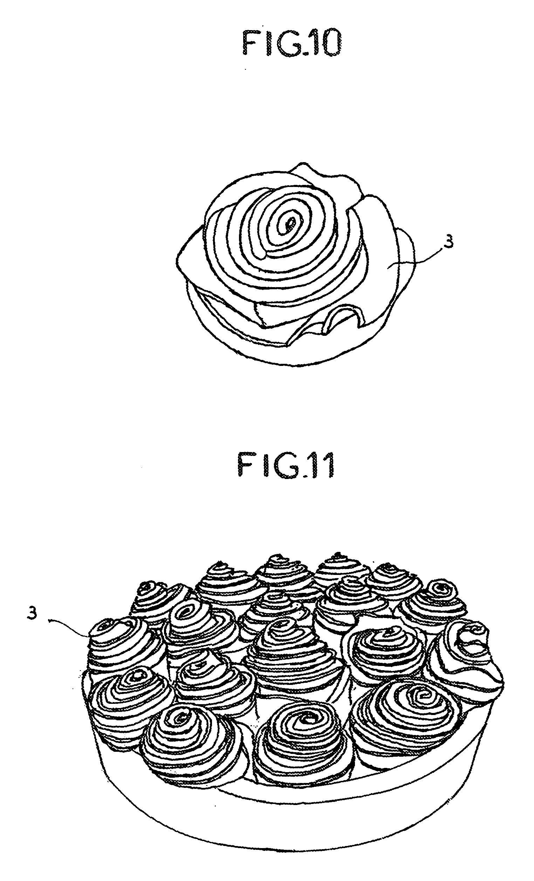

- la figure 10 représente un bouton de rose après cuisson,
- la figure 11 représente une tarte garnie de « boutons de roses » formant après cuisson un « bouquet de roses ».

Le procédé de fabrication semi-automatique d'éléments de garniture de tartes à partir de pulpe de pommes découpée en rubans, enroulés ensuite sur eux-mêmes, puis conformés en forme de bouton de rose, comporte les étapes suivantes :
a) découpe tangentielle progressive des pommes pour en transformer la pulpe en rubans d'épaisseur déterminée,
b) coupe du ruban de pomme en tronçons de longueur déterminée,
c) enroulage sur eux-mêmes des tronçons de ruban obtenus à l'étape (b) pour former des rouleaux de diamètre déterminé,
d) tranchage des rouleaux de ruban obtenus à l'étape (c) pour obtenir des tronçons de longueur déterminée,
e) conformage des tronçons de rouleaux de ruban obtenus à l'étape (d) en forme de bouton de rose par poussage des spires intérieures vers l'une des extrémités de ceux-ci.

Préférentiellement :
- l'épaisseur des rubans obtenus à l'étape (a) est d'environ 0,8 mm,
- la longueur des tronçons de ruban obtenus à l'étape (b) est d'environ 520mm,
- le diamètre des rouleaux de ruban obtenus à l'étape (c) est d'environ 22mm,
- la hauteur des rouleaux de ruban après tranchage est d'environ 35mm.

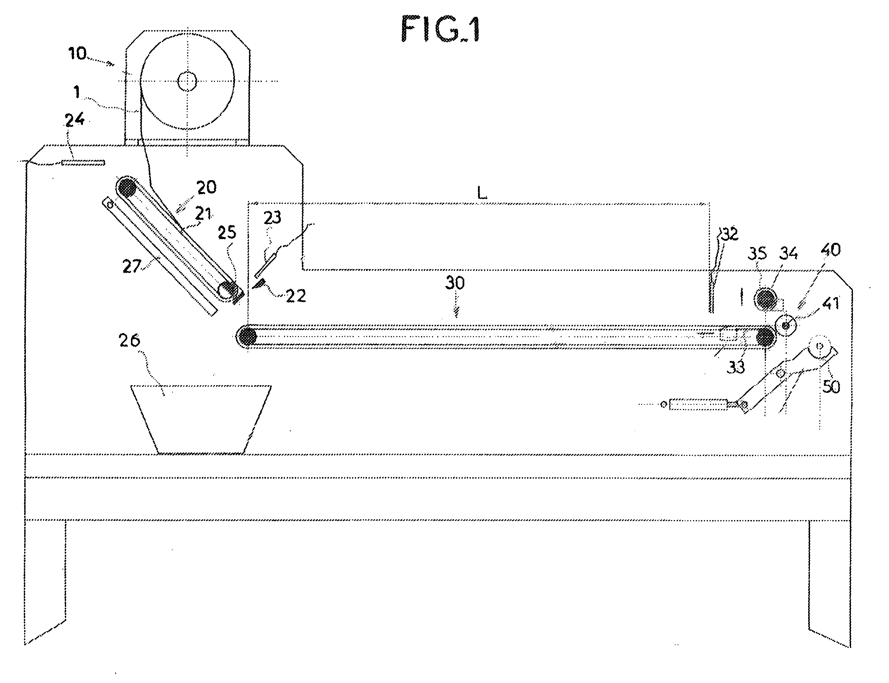

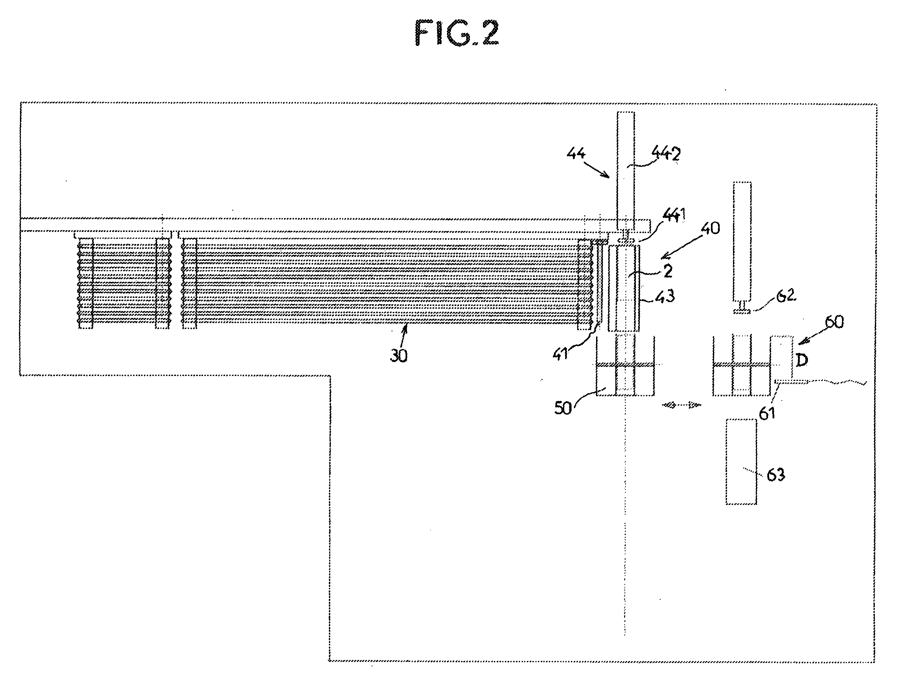

En examinant successivement les figures 1 et 2, on remarque que la machine, fonctionnant selon le procédé, est constituée principalement d'un dispositif de déroulage **10** d'un ruban de pomme **1,** d'un dispositif de guidage et de coupe **20** du ruban à la longueur, d'un convoyeur de stockage **30,** d'un dispositif d'enroulage **40** et d'un dispositif de tranchage **60.**

Comme on le voit, le ruban de pomme **1** sortant du dispositif de déroulage **10** est guidé par un convoyeur motorisé **21** incliné vers l'entrée du convoyeur de stockage **30** de tronçons de ruban successif d'une longueur d'environ 520mm obtenus par sectionnement dudit ruban de pomme **1** par un dispositif de coupe **22,** situé en amont du convoyeur de stockage **30** après détection de présence par un détecteur **23 ;** la rupture éventuelle du ruban, entre le dispositif de déroulage **10** et le dispositif de guidage et de coupe **20,** étant détectée par une cellule photoélectrique **24** située en amont du convoyeur incliné **21.** Une fourchette **25** assure le décollage de l'extrémité du ruban de pommes **1** du convoyeur incliné **21** lors de son transfert vers le convoyeur de stockage **30,** où sa présence et sa longueur sont contrôlées par une cellule **32** située à une distance **L** de 460mm par rapport à l'entrée de celui-ci. Ce tronçon de ruban est ensuite entraîné par le convoyeur de stockage **30,** après décollage de son extrémité par un peigne fixe **33** associé à un peigne mobile **34** combiné à un rouleau **35,** vers la broche d'enroulage **41** du dispositif d'enroulage **40,** puis transféré vers le dispositif de tranchage **60** des rouleaux ainsi obtenus par un godet articulé **50** après retrait de la broche d'enroulage **41** par un vérin pneumatique **42.**

Le dispositif est complété par un bac de récupération **26** des trognons de pommes après le déroulage complet du ruban et du jus résultant de ces déroulages, lequel est collecté par une plaque d'égoutture **27.**

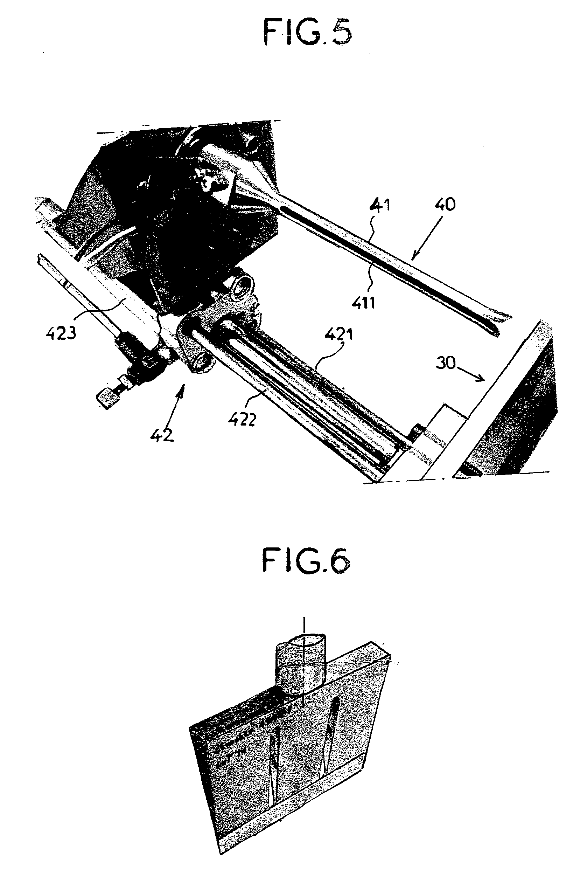

En se reportant maintenant à la figure 2, on constate que le dispositif d'enroulage **40** est constitué d'un boîtier cylindrique **43** assurant le calibrage diamétral des rouleaux dans l'axe duquel pénètre la broche d'enroulage **41** et, qu'après l'enroulage complet de la partie de ruban concernée et retrait de la broche d'enroulage **41,** un dispositif d'extraction **44,** constitué d'un piston **441** actionné par un vérin **442** assure le transfert du rouleau **2** dans le godet articulé **50** qui, par simple pivotement, amène celui-ci au dispositif de tranchage **60,** où ledit rouleau est sectionné dans une proportion déterminée après contrôle de sa longueur par rapport à une cellule **61** située en retrait sur une distance **D** de 65mm de l'ouverture du godet ; ce sectionnement étant effectué par un moyen de tranchage à ultrasons du type de celui représenté à la figure 6 qui est actionné verticalement par un vérin non représenté.

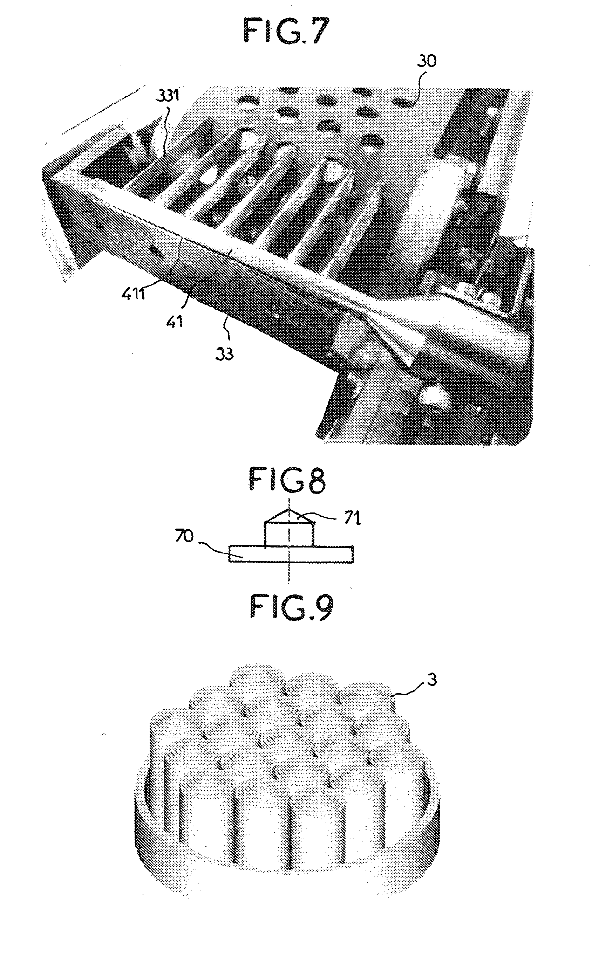

Selon un mode de réalisation préférentiel, les rouleaux sont tronçonnés en deux parties d'égale longueur, qui sont ensuite extraites du dispositif de tranchage **60** par le piston **62** d'un dispositif d'extraction, identique à celui repéré **44** utilisé pour l'extraction du rouleau du dispositif d'enroulage **40,** pour être évacués par une goulotte **63** et dirigés vers un poste de conformage du rouleau de ruban en forme de « boutons de roses », en utilisant le poussoir **70** représenté à la figure **8****,** conçu pour assurer un repoussage régulier et dégradé des spires du rouleau, de l'axe vers la périphérie, comme ceux **3** représentés à la figure **9****.**

En se reportant maintenant aux figures **5** et **7****,** on remarque sur la figure **7** correspondant au dispositif d'enroulage **40** avec sa broche escamotable **41** en position de retrait, que celle-ci est mue par un vérin **42** associé à des tiges de guidage **421** et **422,** et sur la figure **7****,** qu'en position d'attente, le corps **423** du vérin **42** est venu en butée contre l'un des côtés du peigne **33** dans une position telle que la fente **411** de la broche, soit dans le plan matérialisé par le dessus des dents **331** du peigne **33 ;** ceci pour faciliter l'introduction automatique de l'extrémité du ruban de pomme dans ladite fente **411,** en association avec le peigne mobile **34** combiné au rouleau **35,** escamotable vers le haut, prévus pour assurer ce transfert, visibles sur la figure **1****.**

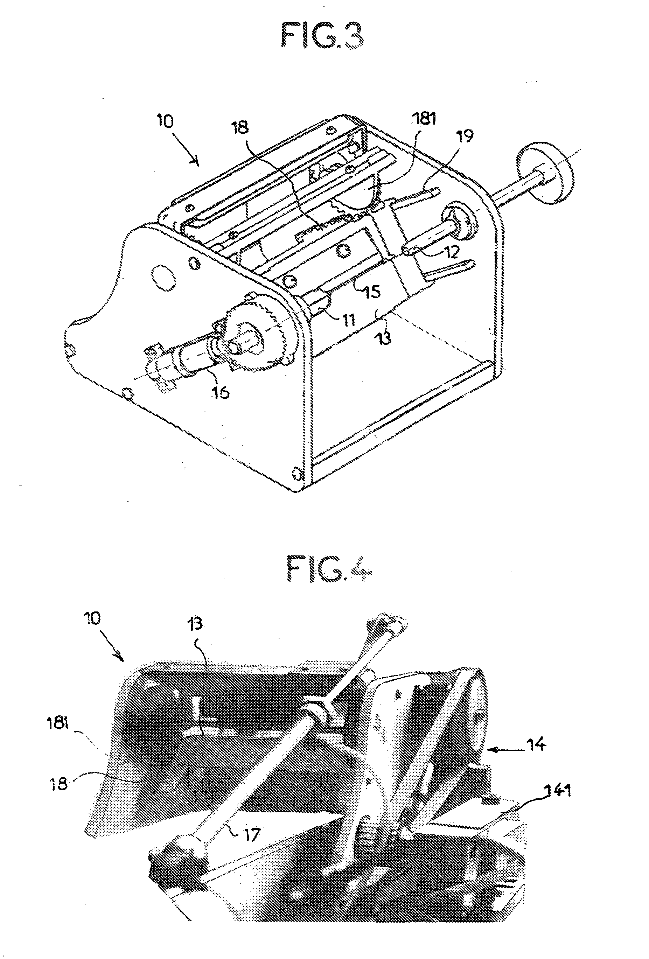

En examinant maintenant conjointement les figures **3** et **4****,** représentant respectivement : le dispositif de base utilisé pour assurer la découpe des pommes en rubans et l'ensemble du dispositif après mécanisation et semi-automatisation de ce moyen de base pour obtenir un dispositif de découpe et de déroulage automatique du ruban **10,** on remarque que, pour obtenir une découpe et un déroulage double à deux entre-pointes, celui-ci comporte une plaque de base supportant un tiroir à deux positions actionné et piloté par un vérin pneumatique **17** permettant de déplacer l'une des deux entre-pointes au dessus du convoyeur de stockage **30** pour assurer le chargement d'une pomme pendant que l'autre est en fonction pour la découpe et le déroulage automatique d'une autre pomme. L'un des côtés des entre-pointes étant muni d'une croix métallique **11** maintenant et entraînant en rotation chaque pomme par l'intermédiaire d'un système de transmission **14** à courroie et poulie crantées, entraîné par un moto-réducteur **141,** l'autre côté étant muni d'un cône de recentrage lisse **12** ; chaque pomme étant maintenue ainsi horizontalement et solidement par le moyen de serrage de l'entre-pointe après son introduction entre les pointes **11** et **12.** Le dispositif de découpe du ruban de pomme étant constitué d'un porte-lame **13** supportant une lame de coupe **15,** animée d'un mouvement oscillant destiné à faciliter le déroulement du ruban de pomme ; le mouvement de montée et de descente de la lame **15** étant assuré par coulissement du porte-lame **13** sur des glissières **19** par l'intermédiaire de crémaillères **18** mues par des engrenages **181** entraînés en rotation par un moto-réducteur **141.** Les convoyeurs **21** et **30** étant constitués, quant à eux, de plusieurs courroies, de section cylindrique, limitant l'adhérence du ruban de pomme.

Ainsi, après que l'opérateur ait introduit une pomme entre les pointes **11** et **12** d'une entre-pointe, la fermeture de celle-ci peut être validée par appui sur un bouton poussoir lumineux. La rotation du moto-réducteur d'entraînement **141** de la transmission **14,** ainsi que celle de l'entre-pointe et par conséquent de la pomme s'effectue et la lame de coupe **15,** animée d'un mouvement oscillant, s'appuie alors sur la pomme sous l'action du vérin **16,** ce qui permet d'obtenir le déroulement d'un ruban de pomme **1** de largeur progressive, qui exige de faire tourner la pomme sur elle-même d'au moins un tour, afin de retirer la peau qui n'est pas utilisable, puis de transformer la pulpe de celle-ci en un fin ruban d'environ 0,8mm d'épaisseur et de 3 600mm de longueur avec des pommes d'environ 80mm de diamètre.

Lorsque la lame de coupe a atteint la limite qui lui est imposée par son capteur de positions, elle revient à sa position initiale ; le moto-réducteur s'arrête alors automatiquement, l'entre-pointe s'ouvre, le trognon tombe dans le bac de récupération et un voyant indique à l'opérateur que le cycle est terminé ; celui-ci peut alors mettre en place une nouvelle pomme sur cette entre-pointe après avoir lancé un nouveau cycle à partir de la pomme déjà mise en place sur l'autre entre-pointe. Les cycles pouvant alors se succéder et se renouveler sans perte de temps comme indiqué ci-dessus.

Pendant ces cycles, le ruban de pomme a été découpé successivement en tronçons d'environ 520mm de longueur qui ont été acheminés l'un après l'autre, par le convoyeur de stockage **30** qui, lorsqu' une distance **L** de 460mm de l'entrée de celui-ci est atteinte par l'extrémité du ruban, en provoque la coupe et en assure le transfert au dispositif d'enroulage **40,** qui transforme successivement lesdits tronçons en rouleaux **2** d'environ 22mm de diamètre destinés à constituer des « boutons de roses » **3,** après leur coupe en deux parties par le dispositif de tranchage **60,** suivie de leur mise en forme appropriée en utilisant le poussoir **70** à extrémité active conique **71** représenté à la figure **8****.**

Les « boutons de roses » **3** ainsi obtenus peuvent être alors utilisés en pâtisserie pour réaliser des « mignardises » composées d'un seul bouton de rose, des « coeurs de bouquet » composés d'un bouton central et de sept boutons périphériques, ou des tartes 2/3 parts composées d'un bouton central, d'une première rangée circulaire de sept boutons et d'une rangée périphérique de 12 boutons, correspondant à l'assemblage de boutons **3** représenté sur la figure **9** **;** ces exemples n'étant pas exhaustifs car lesdits « boutons de roses » peuvent très bien être utilisés en composition avec d'autres éléments de garniture ou pour remplacer les bougies sur un gâteau d'anniversaire. Une large utilisation de ces boutons de roses peut donc être envisagée puisque une production d'environ 3 000 000 de boutons peut être obtenue par an avec une seule machine par deux équipes journalières de 7 heures sur 220 jours de travail annuel avec une machine dont la capacité horaire de production est d'environ 1 000 boutons.

## Revendications

1. Procédé de fabrication d'éléments de garniture de tartes à partir de pulpe de pommes découpée en rubans, enroulés ensuite sur eux-mêmes **caractérise en ce qu'**il comporte les étapes suivantes :
a) découpe tangentielle progressive des pommes pour en transformer la pulpe en rubans d'épaisseur déterminée,
b) coupe du ruban en tronçons de longueur déterminée,
c) enroulage sur eux-mêmes des tronçons de ruban obtenus à l'étape (b) pour former des rouleaux de diamètre déterminé,
d) tranchage des rouleaux de ruban obtenus à l'étape (c) pour obtenir des tronçons de longueur déterminée,
e) conformage des rouleaux de ruban en forme de bouton de rose.

2. Procédé selon la revendication 1, **caractérisé en ce que** l'épaisseur du ruban obtenu à l'étape (a) est d'environ 0,8mm.

3. Procédé selon la revendication 1, **caractérisé en ce que** la longueur des tronçons de ruban obtenus à l'étape (b) est d'environ 520mm.

4. Procédé selon la revendication 1, **caractérisé en ce que** le diamètre des rouleaux de ruban obtenus à l'étape (c) est d'environ 22mm.

5. Procédé selon la revendication 1, **caractérisé en ce que** la longueur des tronçons de rouleaux de ruban obtenus à l'étape (d) est d'environ 35mm.

6. Procédé selon la revendication 1, **caractérisé en ce que** les rouleaux sont mis en forme de bouton de rose par poussage des spires intérieures du ruban vers l'extérieur de l'une de leurs extrémités.

7. Machine de fabrication de garniture de pâtisseries à partir de pulpe de pommes découpée en rubans, enroulés ensuite sur eux-mêmes, mettant en oeuvre le procédé selon les revendications 1 à 6, prises dans leur ensemble, **caractérisée en ce qu'**elle comprend un dispositif de découpage et de déroulage **(10)** du ruban de pomme **(1),** un dispositif de guidage et de coupe **(20)** du ruban de pomme **(1)** en tronçons de longueur déterminée, un convoyeur de stockage **(30),** un dispositif d'enroulage **(40)** des tronçons de ruban, un dispositif de mise à la longueur des rouleaux de ruban **(2)** et un dispositif de conformage en bouton de rose de l'une des extrémités desdits rouleaux **(2).**

8. Machine selon la revendication 7, **caractérisée en ce que** le dispositif de découpage et de déroulage du ruban de pomme **(1)** est constitué d'au moins une entre-pointe supportant la pomme à découper en rubans entraînée en rotation par un moto-réducteur **(141),** d'un porte-lame **(13)** coulissant supportant une lame de coupe **(15)** animée d'oscillation, se rapprochant progressivement de l'axe de rotation de la pomme sous l'action de crémaillères mues par des engrenages entraînés en rotation par le moto-réducteur **(141).**

9. Machine selon la revendication 7, **caractérisée en ce que** le dispositif de guidage et de coupe **(20)** du ruban de pommes en tronçons de longueur déterminée est constitué d'un convoyeur motorisé incliné **(21)** équipé, à sa sortie, d'un dispositif de coupe **(22)** du ruban de pomme **(1)** et d'un détecteur de présence **(23)** du ruban et d'une fourchette **(25)** de décollage de l'extrémité du ruban lors de son transfert sur un convoyeur de stockage **(30).**

10. Machine selon la revendication 7, **caractérisée en ce que** le convoyeur de stockage **(30)** est équipé à une distance déterminée **L** de son entrée d'une cellule de détection de la présence de l'extrémité d'un ruban venant d'être transféré par le dispositif de guidage et de coupe **(20),** qui en assure alors la coupe, ainsi que d'un peigne de décollage de l'extrémité du tronçon de ruban lors de leur transfert vers le dispositif d'enroulage **(40).**

11. Machine selon la revendication 7, **caractérisée en ce que** le dispositif d'enroulage **(40)** des tronçons de ruban est constitué d'une broche d'enroulage escamotable **(41),** fendue axialement, tournant dans un godet cylindrique **(43)** assurant le calibrage diamétral des rouleaux de ruban **(2)** et leur transfert.

12. Machine selon la revendication 7, **caractérisée en ce que** le dispositif de mise à la longueur des rouleaux de ruban (2) est constitué du godet articulé **(50)** assurant le transfert desdits rouleaux **(2)** du boîtier cylindrique de calibrage **(43)** du dispositif d'enroulage **(40),** vers un dispositif de tranchage **(60)** de rouleaux **(2)** où ceux-ci sont sectionnés par l'intermédiaire d'un moyen de tranchage par ultrasons, après contrôle de leur longueur par l'intermédiaire d'une cellule **(61)** de détection de présence située à une distance **D** déterminée de l'ouverture du godet.

13. Machine selon la revendication 7, **caractérisée en ce que** le dispositif de conformage en forme de « bouton de rose » de l'une des extrémités des rouleaux de ruban **(2)** est constitué d'un poussoir **(70)** dont l'extrémité active **(71)** présente une forme conique correspondant au décalage vertical que l'on désire obtenir entre les spires centrales et les spires externes des rouleaux.

14. Machine selon la revendication 8, **caractérisée en ce que** le dispositif de découpage et déroulage du ruban de pomme **(1)** comporte deux entre-pointes mises en oeuvre alternativement.

15. Machine selon la revendication 14, **caractérisée en ce que** le moyen de mise en oeuvre alternative des deux entre-pointes est constitué d'un tiroir à deux positions, actionné et piloté par un vérin, supporté par une plaque de base.

## Claims

1. Method for manufacturing elements for garnishing tarts using apple pulp cut into strips, then rolled over themselves **characterised in that** it comprises the following steps:
a) progressive tangential cutting apples to transform the pulp thereof into strips of a determined thickness,
b) cutting the strip into sections of a determined length,
c) rolling over themselves sections of strips obtained in step (b) in order to form rolls of a determined diameter,
d) slicing the rolls of strips obtained in step (c) in order to obtain sections of a determined length,
e) conforming rolls of strips into the shape of a rosebud.

2. Method according to claim 1, **characterised in that** the thickness of the strip obtained in step (a) is approximately 0.8 mm.

3. Method according to claim 1, **characterised in that** the length of the sections of strip obtained in step (b) is approximately 520 mm.

4. Method according to claim 1, **characterised in that** the diameter of the rolls of strip obtained in step (c) is approximately 22 mm.

5. Method according to claim 1, **characterised in that** the length of the sections of rolls of strip obtained in step (d) is approximately 35 mm.

6. Method according to claim 1, **characterised in that** the rolls are formed into rosebud by pushing inner coils of the strip to the outside of one of their ends.

7. Machine for manufacturing garnish of pastries using apple pulp cut into strips, then rolled onto themselves, implementing the method according to anyone of claims 1 to 6, taken as a whole, **characterised in that** it comprises: a device for cutting and rolling (10) the strip of apple (1); a device for guiding and for cutting (20) the strip of apple (1) into sections of a determined length; a storage conveyor (30); a device for rolling (40) sections of strip; a device for cutting to length of rolls of strips (2); and a device for shaping into rosebuds one of the ends of said rolls (2).

8. Machine according to claim 7, **characterised in that** the device for cutting and rolling the strip of apple (1) is comprised of: at least one centre point supporting the apple to be cut into strips driven in rotation by a gear motor (141); a sliding blade holder (13) holding a cutting blade (15) driven in oscillation, progressively approaching the axis of rotation of the apple under the action of the racks moved by the meshing driven in rotation by the gear motor (141).

9. Machine according to claim 7, **characterised in that** the device for guiding and for cutting (20) strips of apple into sections of a determined length is comprised of: an inclined motorised conveyor (21) equipped, at its exit, with a device for cutting (22) the strip of apple (1); and a detector of presence (23) of the strip; and a fork (25) for peeling off the end of the strip when it is transferred onto a storage conveyor (30).

10. Machine according to claim 7, **characterised in that** the storage conveyor (30) is equipped at a determined distance L from its entrance with a cell for detecting the presence of the end of a strip that has just been transferred by the device for guiding and for cutting (20), which then carries out the cutting thereof, as well as with a comb for undoing the end of the section of strips during their transfer towards the device for rolling (40).

11. Machine according to claim 7, **characterised in that** the device for rolling (40) sections of strip is comprised of a retractable rolling pin (41), slit axially, rotating in a cylindrical bucket (43) providing for the diametral calibration of the rolls of strips (2) and their transfer.

12. Machine according to claim 7, **characterised in that** the device for cutting to length the rolls of strips (2) is comprised of an articulated bucket (50) providing for the transfer of said rolls (2) from the cylindrical calibration case (43) of the rolling device (40), towards a device for slicing (60) rolls (2) where the latter are sectioned by ultrasound means for slicing, after their length is controlled by a presence-detecting cell (61) located at a determined distance D from the opening of the bucket.

13. Machine according to claim 7, **characterised in that** the device for forming into the shape of a "rosebud" one of the ends of the rolls of strips (2) is comprised of a pusher (70) which active end (71) has a tapered shape corresponding to the vertical shift that is sought to be obtained between the central coils and the outer coils of the rolls.

14. Machine according to claim 8, **characterised in that** the device for cutting and unrolling the strip of apple (1) comprises two centre points implemented alternatively.

15. Machine according to claim 14, **characterised in that** the alternative means for implementing the two centre points is comprised of a drawer with two positions, actuated and controlled by a cylinder, supported by a basic plate.

## Patentansprüche

1. Verfahren zur Herstellung von Elementen zur Verzierung von Torten aus Apfelfruchtfleisch, geschnitten in Streifen, dann auf sich selbst gerollt, **dadurch gekennzeichnet, dass** es die folgenden Schritte umfasst:
a) fortschreitendes tangentiales Schneiden der Äpfel, um deren Fruchtfleisch in Streifen mit einer bestimmten Dicke umzuwandeln,
b) Schneiden des Streifens in Abschnitte mit einer bestimmten Länge,
c) Aufrollen der Streifenabschnitte, erhalten in Schritt (b), auf sich selbst, um Rollen mit einem bestimmten Durchmesser zu bilden,
d) Durchschneiden der Streifenrollen, erhalten in Schritt (c), um Abschnitte mit einer bestimmten Länge zu erhalten,
e) Bilden der Streifenrollen in Form von Rosenknospen.

2. Verfahren nach Anspruch 1, **dadurch gekennzeichnet, dass** die Dicke des Streifens, enthalten in Schritt (a) ungefähr 0,8 mm beträgt.

3. Verfahren nach Anspruch 1, **dadurch gekennzeichnet, dass** die Länge der Streifenabschnitte, erhalten in Schritt (b), ungefähr 520 mm beträgt.

4. Verfahren nach Anspruch 1, **dadurch gekennzeichnet, dass** der Durchmesser der Streifenrollen, erhalten in Schritt (c), ungefähr 22 mm beträgt.

5. Verfahren nach Anspruch 1, **dadurch gekennzeichnet, dass** die Länge der Streifenrollenabschnitte, erhalten in Schritt (d), ungefähr 35 mm beträgt.

6. Verfahren nach Anspruch 1, **dadurch gekennzeichnet, dass** die Rollen durch Drücken der inneren Windungen des Streifens auf die Außenseite eines ihrer Enden in die Form einer Rosenknospe gebracht werden.

7. Maschine zur Herstellung einer Verzierung von Konditorwaren aus dem Fruchtfleisch von Äpfeln, geschnitten in Streifen, dann auf sich selbst gerollt, wobei das Verfahren nach Anspruch 1 bis 6 in ihrer Gesamtheit durchgeführt wird, **dadurch gekennzeichnet, dass** sie eine Vorrichtung zum Abschneiden und zum Ausrollen (10) des Apfelstreifens (1) umfasst, eine Vorrichtung zum Führen und Schneiden (20) des Apfelstreifens (1) in Abschnitte einer bestimmten Länge, einen Lagerförderer (30), eine Vorrichtung zum Aufrollen (40) der Streifenabschnitte, eine Vorrichtung zur Längsanordnung der Streifenrollen (2) und eine Vorrichtung zum Bilden einer Rosenknospe aus einem der Enden der Rollen (2).

8. Maschine nach Anspruch 7, **dadurch gekennzeichnet, dass** die Vorrichtung zum Abschneiden und Ausrollen des Apfelstreifens (1) aus mindestens einem Spitzenabstand besteht, der den Apfel, der in Streifen geschnitten werden soll, hält, in Drehung versetzt durch einen Getriebemotor (141), einer gleitenden Klingenhalterung (13), die eine angetriebene Schneideklinge (15) zur Schwingung trägt, die sich fortschreitend der Drehachse des Apfels unter der Einwirkung von Zahnstangen annähert, die durch Zahnradgetriebe bewegt werden, die durch einen Getriebemotor (141) in Drehung versetzt werden.

9. Maschine nach Anspruch 7, **dadurch gekennzeichnet, dass** die Vorrichtung zum Führen und Schneiden (20) des Apfelstreifens in Abschnitte mit einer bestimmten Länge aus einem geneigten motorisierten Förderer (21) besteht, der an seinem Ausgang mit einer Vorrichtung zum Schneiden (22) des Apfelstreifens (1) und einem Detektor der Anwesenheit (23) des Streifens und einer Gabel (25) zum Ablösen des Endes des Streifens bei seiner Übertragung auf einen Lagerförderer (30) ausgestattet ist.

10. Maschine nach Anspruch 7, **dadurch gekennzeichnet, dass** der Lagerförderer (30) in einem bestimmten Abstand L von seinem Eintritt mit einer Zelle zum Nachweis der Anwesenheit des Endes eines Streifens ausgestattet ist, der gerade von der Vorrichtung zum Führen und Schneiden (20) übertragen wurde, die nun den Schnitt davon sicherstellt, ebenso wie mit einem Kamm zum Ablösen des Endes des Streifenabschnitts bei ihrer Übertragung auf die Aufrollvorrichtung (40).

11. Maschine nach Anspruch 7, **dadurch gekennzeichnet, dass** die Vorrichtung zum Aufrollen (40) der Streifenabschnitte aus einem versenkbaren Aufrollstift (41) besteht, axial gespalten, der sich in einem zylindrischen Napf (43) dreht und die diametrale Kalibrierung der Streifenrollen (2) und ihre Übertragung sicherstellt.

12. Maschine nach Anspruch 7, **dadurch gekennzeichnet, dass** die Vorrichtung zur Längsanordnung der Streifenrollen (2) aus dem gelenkigen Napf (50) besteht, der die Übertragung der Rollen (2) des zylindrischen Gehäuses zur Kalibrierung (43) der Aufrollvorrichtung (40) auf eine Abschneidevorrichtung (60) der Rollen (2) sicherstellt, wo diese mit Hilfe eines Mittels zum Abschneiden durch Ultraschall getrennt werden, nach der Kontrolle ihrer Länge mit Hilfe einer Zelle (61) zum Nachweis der Anwesenheit, die sich in einem bestimmten Abstand D von der Öffnung des Napfes befindet.

13. Maschine nach Anspruch 7, **dadurch gekennzeichnet, dass** die Vorrichtung zum Bilden der Form einer "Rosenknospe" aus einem der Enden der Streifenrollen (2) aus einem Stößel (70) besteht, dessen aktives Ende (71) eine konische Form aufweist, die der vertikalen Verschiebung entspricht, die zwischen den zentralen Windungen und den äußeren Windungen der Rollen zu erhalten gewünscht wird.

14. Maschine nach Anspruch 8, **dadurch gekennzeichnet, dass** die Vorrichtung zum Abschneiden und Ausrollen des Apfelstreifens (1) zwei Spitzenabstände umfasst, die alternativ durchgeführt sind.

15. Maschine nach Anspruch 14, **dadurch gekennzeichnet, dass** das Mittel zur alternativen Durchführung der zwei Spitzenabstände aus einem Einschub mit zwei Positionen besteht, die durch eine Winde betätigt und gesteuert werden, die von einer Grundplatte getragen wird.
